# EUROPEAN PATENT APPLICATION

(11) **EP 4 787 279 A1**
(43) Date of publication of application: **05.08.2026**
(21) Application number: 26151190.1
(22) Date of filing: 09.01.2026
(51) Int. Cl.: G06Q 50/04, G05B 19/418

(54) **METHODS AND SYSTEMS FOR UTILIZING BLOCKCHAIN FOR MANUFACTURING METADATA AND PRODUCTION DATA**

(30) Priority: 29.01.2025 US 202519040548
(71) Applicant: RTX Corporation, Farmington, CT 06032 (US)
(72) Inventor: MICHAEL, Stalin, Irving, Texas (US); ALABA, Jude Andrew, San Diego, California (US)
(74) Representative: Dehns

(57) **Abstract**

A method includes obtaining, from a first plurality of sources, production data relating to a plurality of stages of production of a part of a machine. The production data includes at least one of test data, simulation data, validation data, verification data, and reliability data for the part. The method also includes obtaining, from a plurality of second plurality of sources that differs from the first plurality of sources, manufacturing metadata that is separate from the production data. The manufacturing metadata data including data that describes machinery used to manufacture the part. The method also includes storing the production data and the manufacturing metadata in one or more blockchains. A system is also disclosed.

## Description

### BACKGROUND

This application relates to manufacturing, and more particularly to methods and systems for storing and providing access to manufacturing data.

It is common, especially in the aerospace industry, which includes complex products such as gas turbine engines, for manufacturing data (e.g., relating to sensors, robots and actuators used to manufacture engines) to be fragmented across various databases, storage systems, departments, and organizations. This fragmentation creates significant challenges in accessing, integrating, and utilizing data effectively, leading to inefficiencies and missed opportunities for insights.

The lack of a unified data source may for some raise concerns about data integrity, as inconsistencies and discrepancies can arise as the data traverses between the silos. This results in a decreased level of trust and credibility of the data which makes it difficult to rely on such data for critical decision-making processes.

### SUMMARY

A method according to an example embodiment of the present disclosure includes obtaining, from a first plurality of sources, production data relating to a plurality of stages of production of a part of a machine. The production data includes at least one of test data, simulation data, validation data, verification data, and reliability data for the part. The method also includes obtaining, from a plurality of second plurality of sources that differs from the first plurality of sources, manufacturing metadata that is separate from the production data. The manufacturing metadata data includes data that describes machinery used to manufacture the part. The method also includes storing the production data and the manufacturing metadata in one or more blockchains.

In a further embodiment of the foregoing embodiments, the manufacturing metadata describes at least three of the following for the machinery: age, location, maintenance history, manufacturer, model number, sampling rate, sensor type, and firmware version.

In a further embodiment of any of the foregoing embodiments, the manufacturing metadata also includes environmental data that describes an environment in which the machinery operates

In a further embodiment of any of the foregoing embodiments, the environmental data describes at least two of the following for the machinery: temperature, vibration level, pressure, humidity, air quality, location, and light sensitivity.

In a further embodiment of any of the foregoing embodiments, the production of the part occurs at a plurality of different facilities, and the production data and manufacturing metadata are obtained from the plurality of different facilities.

In a further embodiment of any of the foregoing embodiments, the one or more blockchains include a plurality of blockchains, each corresponding to a respective one of the plurality of different facilities.

In a further embodiment of any of the foregoing embodiments, the production data includes at least two of test data, simulation data, validation data, verification data, and reliability data for the part.

In a further embodiment of any of the foregoing embodiments, the production data includes at least three of test data, simulation data, validation data, verification data, and reliability data for the part.

In a further embodiment of any of the foregoing embodiments, at least one of the one or more blockchains is a private blockchain, hybrid blockchain, or consortium blockchain, and limits access to one or more groups of users.

In a further embodiment of any of the foregoing embodiments, the production data for the part includes data from at least 20 separate machines involved in producing the part.

A system according to an example embodiment of the present disclosure includes processing circuitry operatively connected to memory and configured to obtain, from a first plurality of sources, production data relating to a plurality of stages of production of a part of a machine. The production data includes at least one of test data, simulation data, validation data, verification data, and reliability data for the part. The processing circuitry is also configured to obtain, from a plurality of second plurality of sources that differs from the first plurality of sources, manufacturing metadata that is separate from the production data. The manufacturing metadata data includes data that describes machinery used to manufacture the part. The processing circuitry is also configured to store the production data and the manufacturing metadata in one or more blockchains.

In a further embodiment of the foregoing embodiments, the manufacturing metadata describes at least three of the following for the machinery: age, location, maintenance history, manufacturer, model number, sampling rate, sensor type, and firmware version.

In a further embodiment of any of the foregoing embodiments, the manufacturing metadata also includes environmental data that describes an environment in which the machinery operates.

In a further embodiment of any of the foregoing embodiments, the environmental data describes at least two of the following for the machinery: temperature, vibration level, pressure, humidity, air quality, location, and light sensitivity.

In a further embodiment of any of the foregoing embodiments, the production of the part occurs at a plurality of different facilities, and the production data and manufacturing metadata are obtained from the plurality of different facilities.

In a further embodiment of any of the foregoing embodiments, the one or more blockchains include a plurality of blockchains, each corresponding to a respective one of the plurality of different facilities.

In a further embodiment of any of the foregoing embodiments, the production data includes at least two of test data, simulation data, validation data, verification data, and reliability data for the part.

In a further embodiment of any of the foregoing embodiments, the production data includes at least three of test data, simulation data, validation data, verification data, and reliability data for the part.

In a further embodiment of any of the foregoing embodiments, at least one of the one or more blockchains is a private blockchain, hybrid blockchain, or consortium blockchain, and limits access to one or more groups of users.

In a further embodiment of any of the foregoing embodiments, the production data for the part includes data from at least 20 separate machines involved in producing the part.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 is a schematic view of an example system for utilizing one or more blockchains for manufacturing metadata and production data arising from creation of parts a plurality of facilities.
Figure 2 schematically illustrates an example facility that may be used in the system of Figure 1.
Figure 3 schematically illustrates an example computing device that may be used in the system of Figure 1.
Figures 4A schematically illustrates examples of manufacturing metadata.
Figures 4B schematically illustrates additional examples of manufacturing metadata.
Figures 4C schematically illustrates additional examples of manufacturing metadata.
Figure 5 schematically illustrates examples of production data.
Figure 6 is a flowchart of an example method for utilizing one or more blockchains for manufacturing metadata and production data.

### DETAILED DESCRIPTION

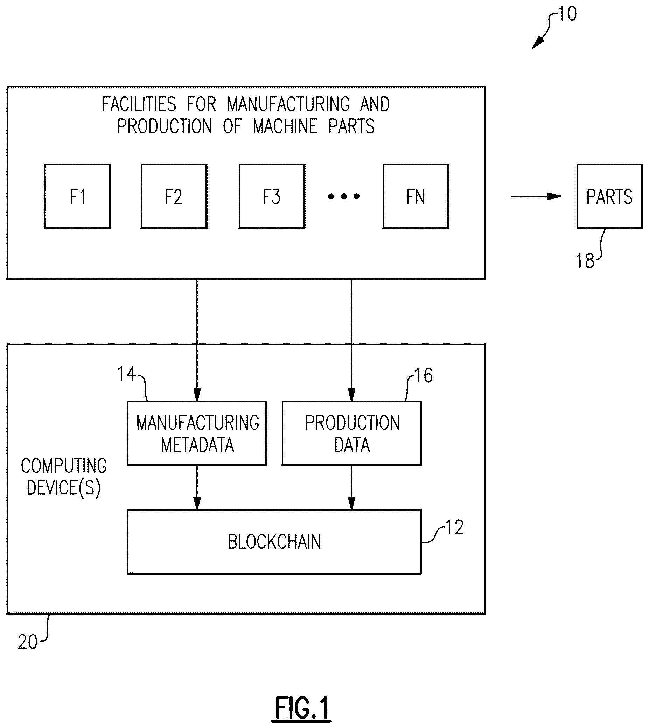

Figure 1 is a schematic view of an example system 10 for utilizing one or more blockchains 12 for manufacturing metadata 14 and production data 16 arising from creation of parts 18 at a plurality of facilities F1-*N.* In particular, one or more computing devices 20 obtain the manufacturing metadata 14 and production data 16 and utilize one or more blockchains 12 to store the data. This may include storing the actual underlying data in the blockchain(s) and/or saving pointers in the blockchain(s) that point to the underlying data.

For complex parts, such as turbine blades, it is common for 20+ facilities to be used in the production of the turbine blade. This generates a substantial amount of manufacturing metadata 14 and production data 16, which historically has been siloed, which presents challenges for access and determining authenticity. As described below in greater detail, the system 10 uses blockchain(s) 12 to address these challenges.

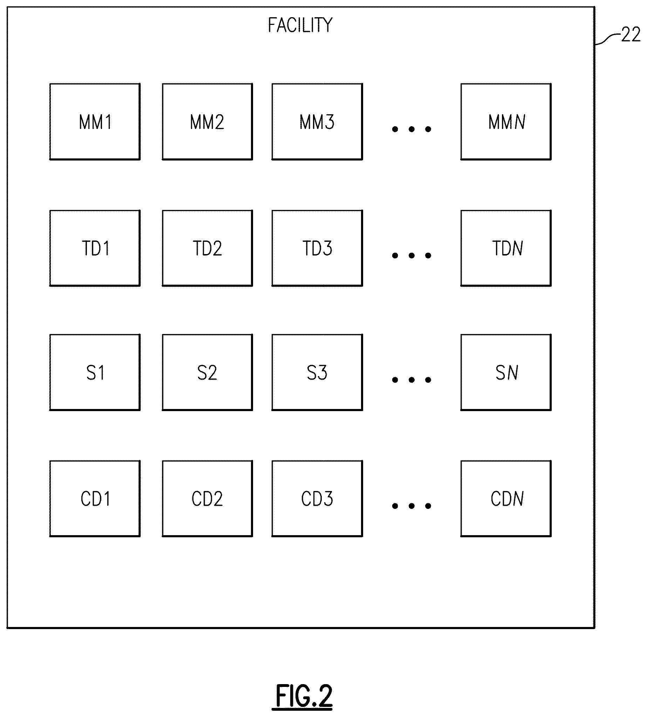

Figure 2 schematically illustrates an example facility 22 that may be used as one of the facilities F1-F*N* from Figure 1. The facility includes a plurality of manufacturing machines MM1-*N*, a plurality of testing devices TD1-*N*, a plurality of sensors S1-*N*, and a plurality of computing devices CD1-*N*. As used herein, *N* is a generic placeholder for a quantity of items that is greater than 3, and although *N* is used multiple times, it is understood that this is not necessarily an indication that all N values are the same.

Some example manufacturing machines MM may include 3D printers (additive manufacturing), robotic arms (assembly lines), material cutting/forming; automatic screw systems, conveyor systems, material joining machines, quality control machines (coordinate measuring machines, X-ray inspection machines, surface roughness testing machines, impurities scanning machines, etc. ), high speed camera/high resolution cameras, robots, peening machines, and other devices. Such machines provide manufacturing metadata relating to the machines (e.g., device age, location, maintenance history, manufacturer, model number, sampling rate, firmware version, etc.).

Some example testing devices TD may include, for example, coordinate measuring machines (to measure dimensions of the part 18), engine performance testing devices, test stands, thrust measurement systems, dynamometers, vibration analyzers, thermal and combustion testing, exhaust gas analyzers, thermocouples, pyrometers, infrared cameras; and eddy current inspection machines.

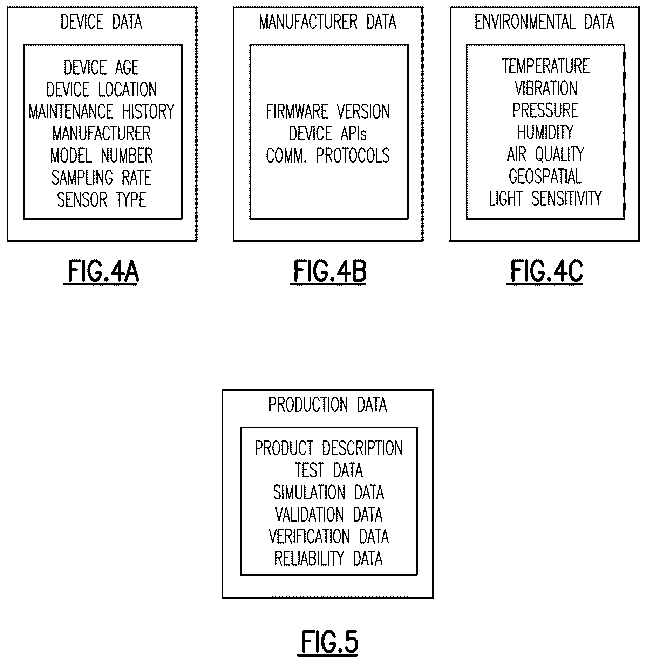

The sensors S may include one or more of the following, for example: temperature sensors, vibration sensors, pressure sensors, humidity sensors, air quality sensors, geospatial (e.g., GPS) sensors, light sensitivity sensors, etc. (see also Figure 4C). The sensors may be used to measure general ambient conditions in the facility (e.g., temperature, humidity, air quality), or may be used to measure specific conditions for a particular part (e.g., vibration of the part, pressure of the part, etc.). The sensors S may be standalone sensors and/or may be part of the manufacturing machines MM, for example.

The computing devices CD may be used to provide one or more of the following, for example: product descriptions, simulation data, validation data, verification data, reliability data, etc.

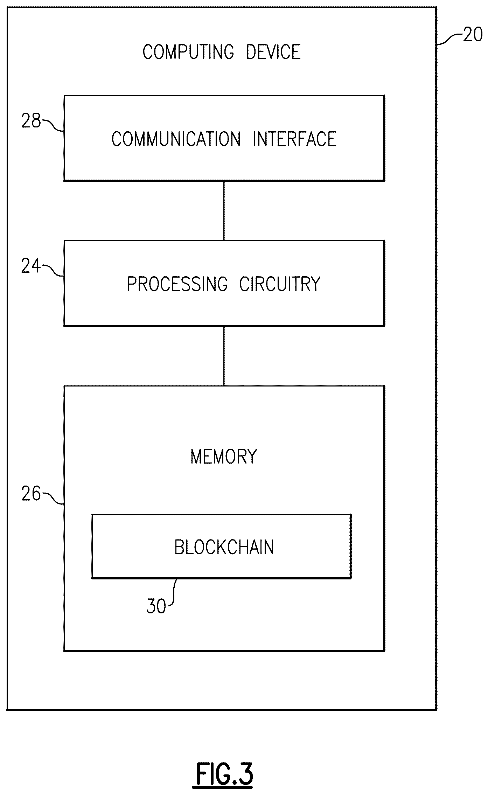

Figure 3 schematically illustrates an example computing device 20 that may be used to create blockchain entries in the one or more blockchains 12 based on the manufacturing metadata 14 and production data 16.

The computing device 20 includes processing circuitry 24 operatively connected to memory 26 and a communication interface 28. The processing circuitry 24 may include one or more microprocessors, microcontrollers, application specific integrated circuits (ASICs), or the like, for example. Although shown in a single computing device 20, it is understood that the processing circuitry may be distributed across a plurality of computing devices.

The memory 26 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 26 may incorporate electronic, magnetic, optical, and/or other types of storage media. The memory 26 can also have a distributed architecture, where various components are situated remotely from one another, but can be accessed by the processing circuitry 24. As shown, the memory 26 may store a copy of the one or more blockchains 12.

The communication interface 28 is configured to facilitate communication between the computing device 20 and other devices (e.g., the various devices shown in Figure 2) over a computer network (e.g., a wide area network such as the Internet). The same architecture may be used for the computing devices CD1-*N* in Figure 2 as well.

Figures 4A-C illustrates examples of manufacturing metadata. In particular, Figure 4A schematically illustrates non-limiting examples of manufacturing metadata which correspond to "device data" about manufacturing devices, such as device age, location, maintenance history, manufacturer, model number, sampling rate, and sensor type (if the device includes a sensor).

Figure 4B schematically illustrates additional non-limiting examples of manufacturing metadata which corresponds to manufacturer data of one of the manufacturing machines MM of Figure 1, such as firmware version, device APIs, and communication protocols.

Figure 4C schematically illustrates additional non-limiting examples of manufacturing metadata which corresponds to environmental data from the sensors S of Figure 1, such as temperature, vibration, pressure, humidity, air quality, geospatial (e.g., GPS), and light sensitivity).

Figure 5 schematically illustrates non-limiting examples of production data. As used herein, "production data" relates to the creation and/or testing of a part, and may include information such as product descriptions, test data, simulation data, validation data, verification data, and reliability data. Thus, for a single part 18 (e.g., a turbine blade) of a single machine (e.g., a gas turbine engine), the volume of associated manufacturing metadata and production data can be very large.

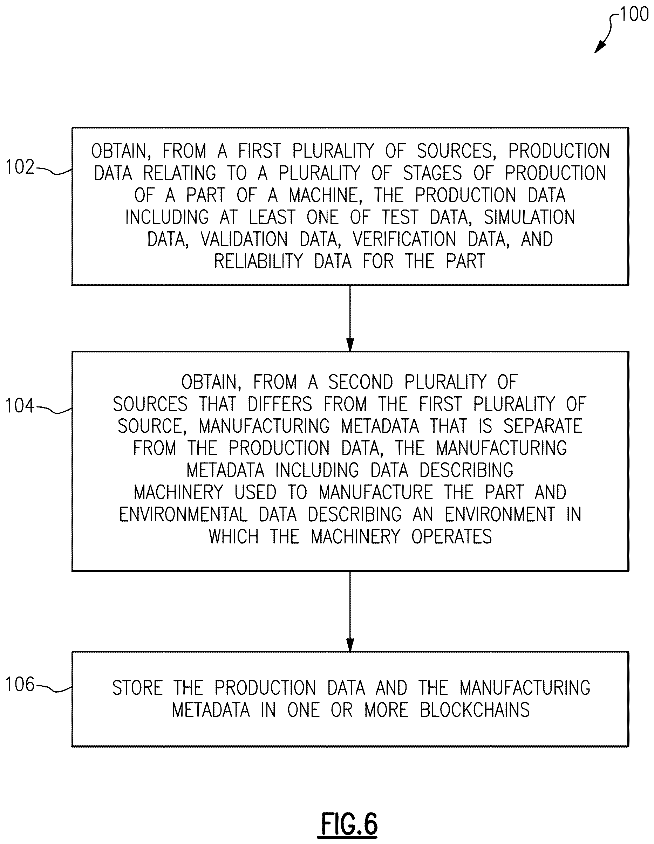

Figure 6 is a flowchart of an example method 100 for utilizing one or more blockchains 12 for manufacturing metadata and production data for the system 10. The computing device(s) 20 obtain, from a first plurality of sources, production data relating to a plurality of stages of production of a part 18 of a machine (step 102). The production data including at least one of test data, simulation data, validation data, verification data, and reliability data for the part 18 (see also Figure 5).

The computing device(s) 20 obtain, from a plurality of second plurality of sources that differs from the first plurality of sources, manufacturing metadata that is separate from the production data (step 104). The manufacturing metadata data including data describing machinery used to manufacture the part and environmental data describing an environment in which the machinery operates (see also Figures 4A-C).

The computing device(s) 20 store the production data and the manufacturing metadata in one or more blockchains 12 (step 106). The storing of step 106 may include storing the underlying data itself, or pointers to the data.

In one or more embodiments, production of the part 18 occurs at a plurality of different facilities F, and the production data and manufacturing metadata are performed for each of the plurality of facilities.

In one or more embodiments, the one or more blockchains 12 includes a plurality of blockchains, each corresponding to a respective one of the different facilities F.

In one or more embodiments, one or more of the blockchains 12 are private blockchains, hybrid blockchains, or consortium blockchains that limit access to one or more groups of users, and thereby prevent access to one or more other groups of users. In one or more examples, a particular subset of manufacturing metadata and/or production data is shared with a customer (e.g., a government customer that is purchasing an aircraft), but is hidden from other vendors that work on different parts for the same aircraft.

Manufacturing sensor data is often fragmented across various databases, storage systems, departments, and organizations. The fragmentations of data creates significant challenges in accessing, integrating, and utilizing data effectively, leading to inefficiencies and missed opportunities for insights. The lack of a unified data source raises concerns about data integrity, as inconsistencies and discrepancies can arise as the data traverses between the silos. In the prior art, the absence of robust, standardized mechanisms to provide traceability and transparency made it nearly impossible to trace the lineage of data and verify its authenticity. This results in a decreased level of trust and credibility of the data which makes it difficult to rely on for critical decision-making processes.

The systems and methods disclosed herein provide a comprehensive, holistic view of the manufacturing chain by unifying data across previously fragmented silos and integrating metadata. This seamless integration allows stakeholders to access real-time, traceable, transparent, and trustworthy information at every stage of the manufacturing process. By establishing an immutable authoritative source of truth, stakeholders can reliably gain insights into the status of the supply chain, inventory, embedded software, firmware, sensor APIs, wireless communication protocols, web and mobile applications, cloud services, and backend network infrastructure. This not only informs us about the manufacturing processes but also enhances trust in the sensors collecting this data, offering a deeper level of credibility.

Although example embodiments have been disclosed, a worker of ordinary skill in this art would recognize that certain modifications would come within the scope of this disclosure. For that reason, the following claims should be studied to determine the scope and content of this disclosure.

## Claims

1. A method, comprising:
obtaining, from a first plurality of sources, production data relating to a plurality of stages of production of a part of a machine, the production data including at least one of test data, simulation data, validation data, verification data, and reliability data for the part;
obtaining, from a plurality of second plurality of sources that differs from the first plurality of sources, manufacturing metadata that is separate from the production data, the manufacturing metadata data including data that describes machinery used to manufacture the part; and
storing the production data and the manufacturing metadata in one or more blockchains.

2. The method of claim 1, wherein the manufacturing metadata describes at least three of the following for the machinery: age, location, maintenance history, manufacturer, model number, sampling rate, sensor type, and firmware version.

3. The method of claim 2, wherein the manufacturing metadata also includes environmental data that describes an environment in which the machinery operates.

4. The method of claim 3, wherein the environmental data describes at least two of the following for the machinery: temperature, vibration level, pressure, humidity, air quality, location, and light sensitivity.

5. The method of any preceding claim, wherein:
the production of the part occurs at a plurality of different facilities; and
the production data and manufacturing metadata are obtained from the plurality of different facilities.

6. The method of claim 5, wherein the one or more blockchains include a plurality of blockchains, each corresponding to a respective one of the plurality of different facilities.

7. The method of any preceding claim, wherein the production data includes at least two of test data, simulation data, validation data, verification data, and reliability data for the part.

8. The method of any preceding claim, wherein the production data includes at least three of test data, simulation data, validation data, verification data, and reliability data for the part.

9. The method of any preceding claim, wherein at least one of the one or more blockchains is a private blockchain, hybrid blockchain, or consortium blockchain, and limits access to one or more groups of users.

10. The method of any preceding claim, wherein the production data for the part includes data from at least 20 separate machines involved in producing the part.

11. A system, comprising:
processing circuitry operatively connected to memory and configured to:
obtain, from a first plurality of sources, production data relating to a plurality of stages of production of a part of a machine, the production data including at least one of test data, simulation data, validation data, verification data, and reliability data for the part;
obtain, from a plurality of second plurality of sources that differs from the first plurality of sources, manufacturing metadata that is separate from the production data, the manufacturing metadata data including data that describes machinery used to manufacture the part; and
store the production data and the manufacturing metadata in one or more blockchains.

12. The system of claim 11, wherein the manufacturing metadata describes at least three of the following for the machinery: age, location, maintenance history, manufacturer, model number, sampling rate, sensor type, and firmware version;
optionally wherein the manufacturing metadata also includes environmental data that describes an environment in which the machinery operates;
optionally wherein the environmental data describes at least two of the following for the machinery: temperature, vibration level, pressure, humidity, air quality, location, and light sensitivity.

13. The system of claim 11 or 12, wherein:
the production of the part occurs at a plurality of different facilities; and
the production data and manufacturing metadata are obtained from the plurality of different facilities;
optionally wherein the one or more blockchains include a plurality of blockchains, each corresponding to a respective one of the plurality of different facilities.

14. The system of claim 11, 12 or 13, wherein the production data includes at least two of test data, simulation data, validation data, verification data, and reliability data for the part;
optionally wherein the production data includes at least three of test data, simulation data, validation data, verification data, and reliability data for the part.

15. The system of any of claims 11 to 14, wherein at least one of the one or more blockchains is a private blockchain, hybrid blockchain, or consortium blockchain, and limits access to one or more groups of users.
